# FASCICULE DE BREVET EUROPEEN

(11) **EP 3 254 811 B1**
(45) Date de publication et mention de la délivrance du brevet: **14.01.2026**
(21) Numéro de dépôt: 17180206.9
(22) Date de dépôt: 19.05.2015
(51) Int. Cl.: B25J 9/10, B25J 19/00, B66C 23/00, B25J 9/16, F16F 15/28

(54) **MANIPULATEUR COBOTIQUE**
MANIPULATOR EINES KOLLABORATIVEN ROBOTERS
COBOTIC MANIPULATOR

(30) Priorité: 27.05.2014 FR 1454796
(43) Date de publication de la demande: 13.12.2017
(62) Demande divisionnaire de: 15725554.8
(73) Titulaire: Commissariat à l'Energie Atomique et aux Energies Alternatives, 75015 Paris (FR); Sarrazin Technologies, 71420 Perrecy-les-Forges (FR)
(72) Inventeur: DAVID, Olivier, 91430 IGNY (FR); GARREC, Philippe, 91190 GIF-SUR-YVETTE (FR); ANDRE, Sylvain, décédé(e) (FR)
(74) Mandataire: Cabinet Boettcher

(56) Documents cités:
- FR-A1- 2 442 212
- FR-A1- 2 555 493
- FR-A1- 2 806 025
- FR-A1- 2 806 716
- FR-A1- 2 981 339
- FR-B1- 2 806 025
- FR-B1- 2 806 716
- US-B1- 6 430 473
- US-B1- 6 612 449
- LUCIAN BALAN ET AL: "Real-time 3D Collision Avoidance Method for Safe Human and Robot Coexistence", INTELLIGENT ROBOTS AND SYSTEMS, 2006 IEEE/RSJ INTERNATIONAL CONFERENCE ON, IEEE, PI, 1 October 2006 (2006-10-01), pages 276 - 282, XP031006532, ISBN: 978-1-4244-0258-8

## Description

### DOMAINE DE L'INVENTION

L'invention concerne la cobotique et plus précisément les dispositifs de manipulation de charge.

### ETAT DE LA TECHNIQUE

De nombreuses activités industrielles impliquent de manipuler et transporter des charges. Les normes relatives à la protection des travailleurs limitent généralement les charges manipulables admissibles par un homme sans assistance à des charges oscillant entre 100 N et 350 N. Au-delà, une assistance mécanique est requise, notamment grâce à des manipulateurs de charge.

Il est connu des manipulateurs de charge comprenant une potence verticale de laquelle s'étend une succession de bras horizontaux articulés les uns aux autres autour d'axes verticaux et dont le dernier bras comprend une extrémité destinée à être liée à la charge à manipuler. Des moyens d'équilibrage de la charge reprennent les efforts verticaux soit au niveau de l'extrémité du dernier bras articulé à l'aide d'un treuil à câble, soit au niveau de la potence à l'aide d'un vérin vertical.

La précision des manipulateurs à treuils pose problème dans certaines applications car ils ne permettent pas un positionnement précis en raison du ballant de la charge suspendue au bout du câble et des frottements dans les articulations des bras. Les manipulateurs à vérin vertical sont, quant à eux, insensibles au ballant de la charge mais ne permettent pas un guidage de celle-ci. Le vérin vertical permet au mieux d'ajuster la hauteur de la charge sous réserve d'un asservissement en position. Ces dispositifs sont donc utilisés pour assister la manutention d'une charge par équilibrage de celle-ci, le positionnement et le guidage de la charge étant assurés par l'opérateur. Un tel dispositif permet de réaliser une grande variété de tâches. Cependant, la précision du positionnement de la charge dépend de l'opérateur, ce qui peut impacter la rapidité et la qualité d'exécution d'une tâche lorsqu'elle requiert un positionnement précis de la charge ou le suivi d'une trajectoire particulière.

Il existe également des manipulateurs de charge robotisés comprenant une base sur laquelle est articulé un ensemble de bras reliés entre eux par des motoréducteurs pourvus de codeurs rotatifs dont les informations sont transmises à une unité de traitement. Un des bras comprend une extrémité destinée à être liée à une charge. Ces bras peuvent réaliser un guidage extrêmement précis de la charge grâce aux codeurs couplés aux motoréducteurs qui développent également chacun des couples permettant un équilibrage du manipulateur à vide ou en charge. Les codeurs rotatifs permettent à l'unité de traitement de définir précisément la position de chacun des bras, d'en déduire la position de la charge dans un référentiel lié au dispositif de manipulation et donc de définir les commandes à envoyer aux motoréducteurs pour positionner précisément la pièce dans ce référentiel. De tels dispositifs développent d'importants efforts lorsqu'ils guident la charge et sont donc susceptibles de blesser un opérateur à proximité ou d'endommager la charge ou son environnement. Ces dispositifs sont donc généralement destinés à effectuer, de manière autonome, des tâches limitées et ne sont pas adaptés à une utilisation collaborative avec l'utilisateur.

Le document US 6612449 B1 décrit un dispositif de manipulation de charge permettant à la fois d'être guidé à la main par un opérateur et de se déplacer de façon précise entre deux points donnés grâce à des servomoteurs.

### OBJET DE L'INVENTION

Un but de l'invention est de permettre le guidage d'une charge manipulée avec un risque réduit pour l'opérateur assurant la manipulation.

### RESUME DE L'INVENTION

A cet effet, on prévoit un dispositif de manipulation de charge comportant un manipulateur de charge comprenant au moins deux segments articulés entre eux, dont un segment de flèche également articulé sur un châssis et un segment de balancier qui comprend une extrémité destinée à recevoir une charge à manipuler. Selon l'invention, le dispositif de manipulation de charge comprend des moyens d'équilibrage de sorte que le manipulateur de charge soit stable en toute position qu'il porte la charge ou non (c'est-à-dire que l'incertitude de l'équilibrage est inférieure à la valeur des frottements en toute position) et des moyens de guidage pour contraindre la position du manipulateur de charge. Ainsi, les moyens de guidage étant distincts des moyens d'équilibrage de la charge, il est possible de disposer d'un dispositif de manipulation de charge de forte capacité mais dont les actionneurs de guidage exercent des efforts significativement plus faibles que les efforts d'équilibrage et qui sont donc sans danger pour la charge, son environnement et/ou l'opérateur manipulant le dispositif. Les moyens de guidage permettent de définir des trajectoires en exerçant sur les segments du manipulateur des efforts de rappel vers une trajectoire définie. Une fonction d'anti-collision peut également être obtenue en exerçant sur les segments du manipulateur des efforts tendant à écarter la charge d'une zone interdite.

Selon l'invention, le dispositif de manipulation de charge comprend des moyens de mesure de la position de chacun des éléments du manipulateur de charge et des moyens de modélisation tridimensionnelle des éléments du manipulateur de charge, de son environnement et/ou de la charge destinée à être liée à l'extrémité du segment de balancier, le dispositif comprenant également des moyens de traitement des éléments modélisés pour détecter un mouvement du manipulateur de charge pouvant amener à une collision entre les éléments modélisés et pour envoyer une consigne aux moyens de guidage du manipulateur pour que les moyens de guidage génèrent un effort s'opposant au mouvement pouvant amener à la collision. Ainsi, plutôt que d'établir des points de blocage du bras et/ou de la charge lorsqu'elle atteint une position interdite (contrainte de position) pouvant amener à des à-coups dans le mouvement du manipulateur, le dispositif de manipulation de charge exerce un effort s'opposant à la poursuite du mouvement. Un tel effort est plus aisé à interpréter par l'opérateur du manipulateur et améliore l'ergonomie et le confort de travail (réduction des vibrations et des résistances ressenties par l'utilisateur).

Dans un mode de réalisation avantageux, le manipulateur comprend une bielle de renvoi parallèle à un segment de flèche articulé sur le châssis. Le segment de flèche et la bielle de renvoi ont des premières extrémités articulées sur un segment de balancier dont une extrémité est destinée à être liée à la charge à manipuler. Les deuxièmes extrémités du segment de flèche et de la bielle de renvoi sont reliées par une bielle de manière à former un parallélogramme déformable articulé. Selon ce mode de réalisation, les moyens d'équilibrage comprennent des moyens d'équilibrage à vide pour équilibrer le manipulateur de charge à vide et des moyens d'équilibrage en charge pour équilibrer le manipulateur de charge en charge. Il est alors possible de réaliser un équilibrage permanent du manipulateur de charge à vide, par exemple, par utilisation d'un ensemble de contrepoids indépendant de l'équilibrage spécifique de la charge qui peut être réalisé par des moyens plus coûteux tels que des vérins.

Selon un mode de réalisation préféré, les moyens de guidage du manipulateur comprennent un vérin à câble. Les vérins à câble sont des actionneurs compacts qui peuvent être utilisés aussi bien pour l'application d'un effort que pour la mesure d'un déplacement. Ces actionneurs peuvent également être utilisés pour réaliser une compensation des frottements dans les articulations du manipulateur.

Selon un autre mode de réalisation, les moyens de traitement des éléments modélisés comprennent des moyens de mémorisation d'au moins une modélisation d'une trajectoire de référence de la charge à manipuler, les moyens de traitement des éléments modélisés étant agencés pour détecter un mouvement du manipulateur de charge pouvant amener à un écart de la modélisation de la trajectoire de la charge avec la modélisation de la trajectoire de référence et pour envoyer une consigne aux moyens de guidage du manipulateur de charge pour qu'ils génèrent un effort s'opposant au mouvement du manipulateur de charge pouvant amener à un écart entre la modélisation de la trajectoire de la charge et la modélisation de la trajectoire de référence.

Le guidage ainsi obtenu offre un plus grand confort d'utilisation car il ne réalise pas des venues en butées brutales du manipulateur à l'encontre d'un mouvement imposé par l'opérateur. Le guidage est fluide, sans points durs ce qui limite l'apparition de troubles musculo-squelettiques et permet d'améliorer l'ergonomie et le confort de travail.

Selon un autre mode réalisation, le dispositif de manipulation de charge comprend un deuxième manipulateur de charge mis en parallèle avec un premier manipulateur de charge, et les extrémités de chaque manipulateur sont reliées à la charge à manipuler par des moyens de liaison comprenant au moins une rotule, le dispositif comprenant également des moyens de pilotage des moyens d'équilibrage de chaque manipulateur. Avantageusement, les moyens de liaison comprennent des moyens d'équilibrage de la rotation de la charge autour d'un axe reliant les extrémités des manipulateurs.

### BREVE DESCRIPTION DES DESSINS

Il sera fait référence aux figures annexées parmi lesquelles :
- la figure 1 est une vue schématique de côté d'un premier mode de réalisation du dispositif de manipulation de charge selon l'invention;
- la figure 2 est une vue de côté du dispositif de la figure 1 depuis un point de vue opposé à 180 degrés ;
- la figure 3 est une vue schématique en perspective partiellement écorchée du dispositif de la figure 1;
- la figure 4 est une vue de détail en perspective du dispositif de manipulation de la figure 1;
- la figure 5 est une vue similaire à celle de la figure 4 dans laquelle une partie des éléments cachés a été rendue apparente;
- la figure 6 est une vue de détail en perspective de dessus du dispositif de manipulation de la figure 1;
- la figure 7 est une vue arrière de détail en perspective du dispositif de manipulation de la figure 1 ;
- la figure 8 est une vue schématique du dispositif de manipulation de la figure 1 dans une situation de travail ;
- la figure 9 est une vue similaire à celle de la figure 8 dans laquelle le dispositif selon l'invention est dans une situation d'anticollision ;
- la figure 10 est une vue similaire à celle de la figure 8 dans laquelle le manipulateur est dans une situation de guidage de la charge ;
- la figure 11 est une vue en perspective d'un deuxième mode de réalisation particulier d'un dispositif de manipulation de charge selon l'invention ;
- la figure 12 est une vue de détail en perspective du mode de réalisation de la figure 11 ;
- la figure 13 est une vue de détail en perspective d'un troisième mode de réalisation particulier d'un dispositif de manipulation de charge selon l'invention.

### DESCRIPTION DETAILLEE DE L'INVENTION

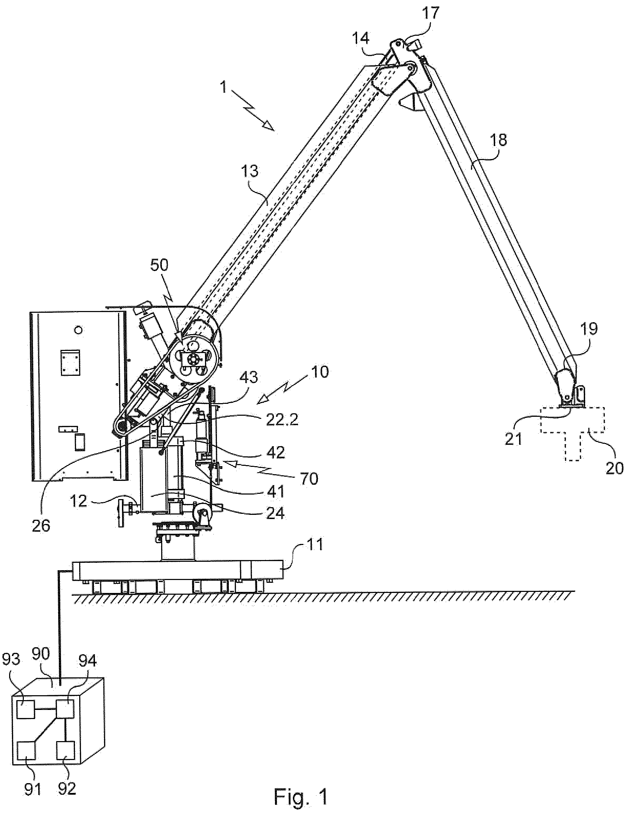

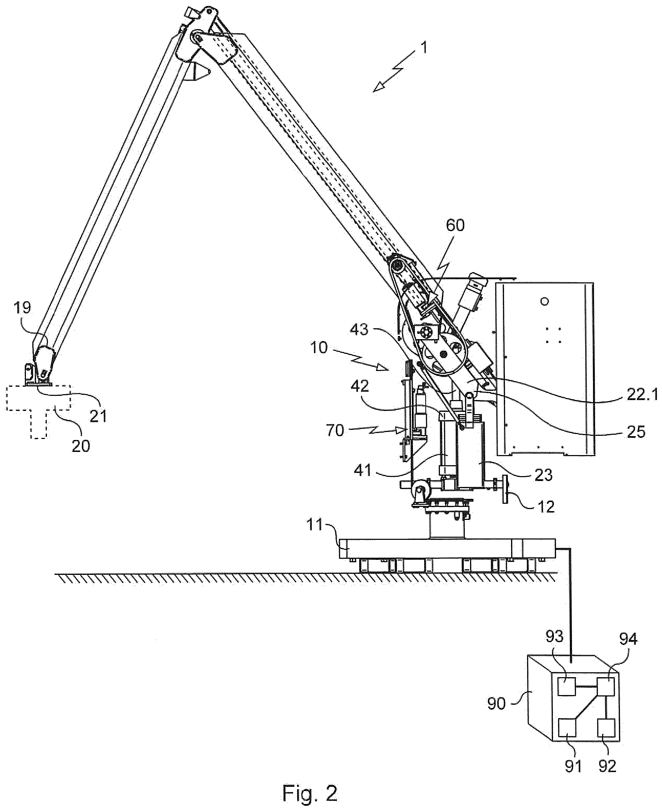

En référence aux figures 1 à 7, le dispositif de manipulation de charge généralement désigné 1 comprend un manipulateur 10 de charge relié à une unité de supervision 90.

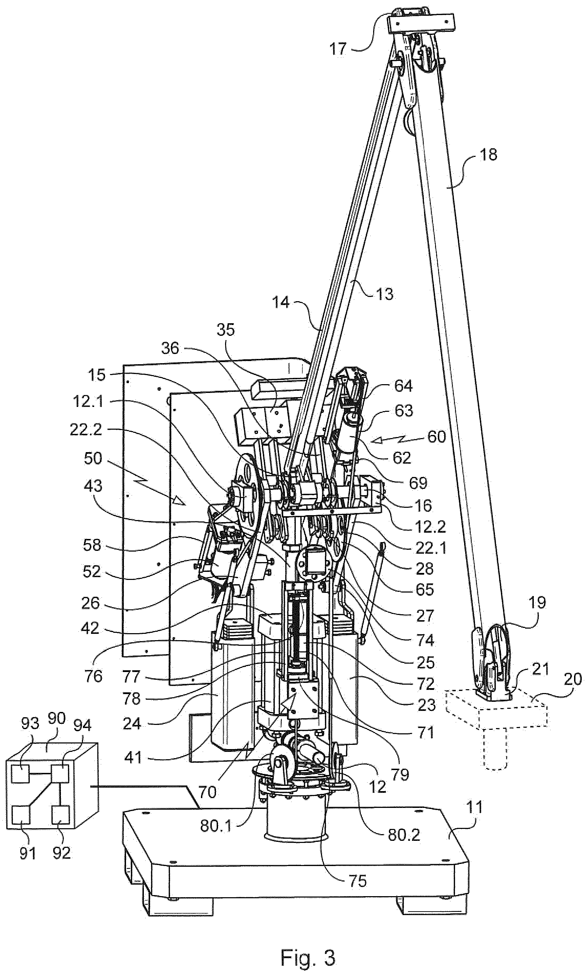

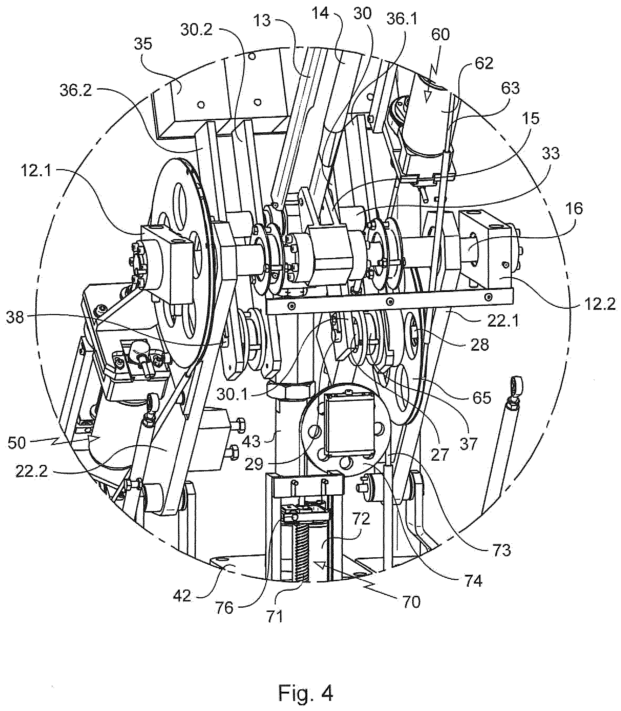

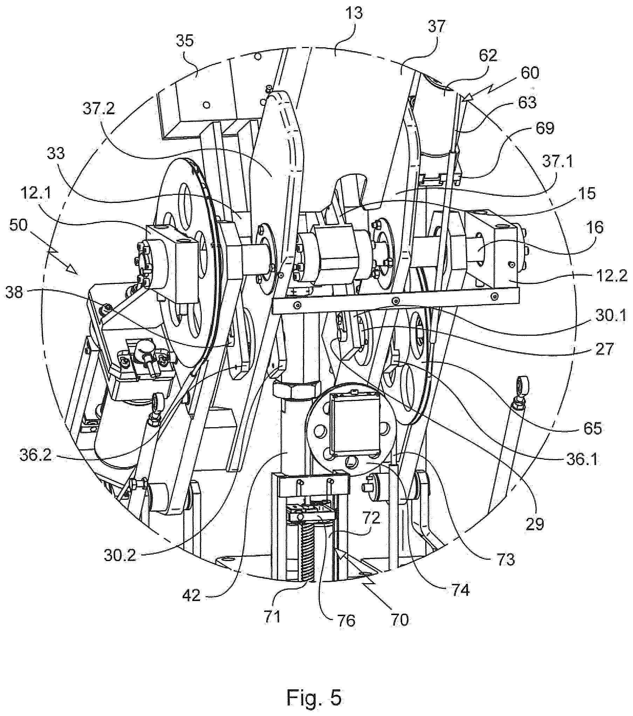

Le manipulateur 10 repose sur une surface horizontale et comprend un support 11 sur lequel un châssis 12 (partiellement représenté pour des raisons de clarté) est monté à rotation autour d'un axe vertical. Un segment de flèche 13 et une bielle de renvoi 14 parallèles entre eux s'étendent depuis le châssis 12. Comme visible sur les figures 3 et 4, la bielle de renvoi 14 est articulée sur une bielle 15 solidaire d'un arbre horizontal 16 monté à rotation sur deux paliers 12.1 et 12.2 solidaires du châssis 12. Plus particulièrement visible en figure 5, le segment de flèche 13 comprend un caisson s'étendant autour de la bielle de renvoi 14 et qui est articulé sur l'arbre 16.

Une première portion 17 d'un segment de balancier 18 relie les extrémités distales respectives du segment de flèche 13 et de la bielle de renvoi 14. L'extrémité 19 du segment de balancier 18 opposée à la portion 17 comprend des moyens de liaison à une charge 20 à manipuler, ici sous la forme d'une platine de fixation 21.

Deux supports 22.1 et 22.2 solidaires de l'arbre 16 s'étendent de part et d'autre de la bielle 15 selon une direction sensiblement parallèle à celle du segment de flèche 13 et de la bielle de renvoi 14. Deux contrepoids 23 et 24 sont respectivement articulés sur les extrémités 25 et 26 respectives des supports 22.1 et 22.2.

Un arbre 27 articulé sur le support 22.1 en sa première extrémité 28 s'étend parallèlement à l'arbre 16 et reçoit, articulé en sa deuxième extrémité 29, un premier élément 30.1 d'un balancier 30 également articulé en un point 31 sur l'extrémité 32 de la bielle de renvoi 14 via un arbre 33. L'extrémité 34 du balancier 30 est reliée à un contrepoids 35. Comme visible sur la figure 4, un deuxième élément 36.1 identique à l'élément 30 est également articulé sur les arbres 27 et 33 et comprend une extrémité solidaire du contrepoids 35. En référence à la figure 5, la première aile 37.1 d'un support 37 solidaire du segment de flèche 13 est articulée sur les arbres 27 et 16. Deux éléments 30.2 et 36.2, respectivement homologues aux éléments 30 et 36 et symétriques à ceux-ci par rapport à un plan vertical contenant le segment de flèche 13 et la bielle de renvoi 14, sont articulés sur un arbre 38 les reliant ainsi que sur l'arbre 33. La deuxième aile 37.2 du support 37 est, comme la première aile 37.1 articulée sur l'arbre 38 et l'arbre 16.

La bielle 15 fait office de contrebalancier et forme un parallélogramme déformable avec le segment de flèche 13, la bielle de renvoi 14 ainsi que la portion 17 du segment de balancier 18.

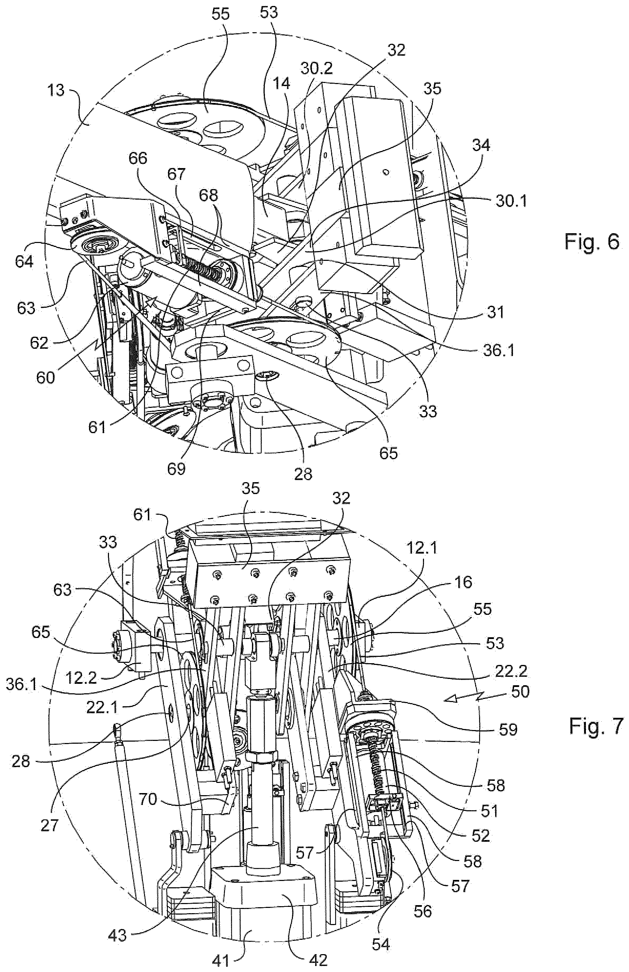

Les contrepoids 23, 24 et 35 réalisent un équilibrage à vide du manipulateur 10 en compensant les effets du poids propre de ses éléments. Le cylindre 41 d'un vérin 42 d'équilibrage est guidé en translation par rapport au châssis 12 tandis que sa tige 43 est articulée sur l'arbre 33 comme visible sur la figure 7. Ce vérin 42 réalise l'équilibrage en charge du manipulateur 10 en compensant les effets de la charge 20 sur le manipulateur 10.

Le manipulateur 10 comprend également trois vérins à câbles 50, 60 et 70.

En référence à la figure 7, le premier vérin à câble 50 comprend de manière connue en soi, une vis 51 menée par un moteur électrique 52 et traversée par une boucle de câble 53 enroulée autour d'une petite poulie 54 et d'une grande poulie 55. La vis 51 comprend des moyens d'anti-rotation sous la forme d'une noix de guidage 56 coopérant avec les rainures 57 de deux rails de guidage 58. Le châssis 59 du vérin à câble 50 est fixé au support 22.2. La petite poulie 54 est montée à rotation sur le support 22.2 tandis que la grande poulie 55 est montée à rotation sur l'arbre 16 et est solidaire en rotation de la partie fixe du palier 12.1. Ainsi, une rotation du moteur 52 entraîne une translation de la vis 51 et un déplacement du câble 53. La grande poulie 55 étant solidaire en rotation de la partie fixe du palier 12.1, le déplacement du câble 53 entraîne alors une rotation du vérin à câble 50, du support 22.2, de l'arbre 16 et de l'ensemble des éléments solidaires de l'arbre 16 autour de l'axe de ce même arbre 16. De la même façon, l'application d'un couple par le moteur 52 agira à l'encontre d'une rotation de l'axe 16 selon une direction donnée.

En référence aux figures 4 à 6, le vérin à câble 60 comprend de manière homologue une vis 61, un moteur 62, une boucle de câble 63 enroulée autour d'une petite poulie 64 et d'une grande poulie 65 ainsi qu'une noix de guidage 66 coopérant avec les rainures 67 de deux rails de guidage 68. Le châssis 69 du vérin à câble 60 est fixé au support 37. La petite poulie 64 est montée à rotation sur le châssis 69 tandis que la grande poulie 65 est montée à rotation sur l'arbre 27 et est solidaire en rotation de l'élément 36.1. Ainsi, une rotation du moteur 62 entraîne une translation de la vis 61 et un déplacement du câble 63. La grande poulie 65 étant solidaire en rotation de l'élément 36.1, le déplacement du câble 63 entraîne alors une rotation de cet élément 36.1 autour de l'arbre 27 et donc un mouvement de rotation de l'extrémité 32 de la bielle de renvoi 14 autour de l'axe de l'arbre 27 transmis par l'élément 36.1 à l'extrémité 32 via l'arbre 33. De la même façon, l'application d'un couple par le moteur 62 agira à l'encontre d'une rotation de l'extrémité 32 autour de l'axe de l'arbre 27.

Un dernier vérin à câble 70, visible en figure 3, comprend de manière homologue une vis 71, un moteur 72, une boucle de câble 73 enroulée autour d'une petite poulie 74 et d'une grande poulie 75 ainsi qu'une noix de guidage 76 coopérant avec les rainures 77 de deux rails de guidage 78. Le châssis 79 du vérin à câble 70 est fixé au châssis 12. La petite poulie 74 est montée à rotation sur le châssis 12 autour d'un axe horizontal tandis que la grande poulie 75 est montée à rotation sur le châssis 12 autour d'un axe vertical et est solidaire en rotation du support 11. Deux poulies de renvoi 80.1 et 80.2 solidaires du châssis 12 assurent le renvoi du câble 73 vers la grande poulie 75. Ainsi, une rotation du moteur 72 entraîne une translation de la vis 71 et un déplacement du câble 73. La grande poulie 75 étant solidaire en rotation du support 11, le déplacement du câble 73 entraîne alors une rotation relative du châssis 12 par rapport au support 11 autour d'un axe vertical. De la même façon, l'application d'un couple par le moteur 72 agira à l'encontre d'une rotation relative du châssis 12 par rapport au support 11 autour d'un axe vertical.

Les vérins à câble 50, 60 et 70 sont reliés à l'unité de supervision 90 et peuvent alors réaliser les opérations suivantes :
- par application d'un couple prédéterminé allant dans le sens du mouvement, compenser les frottements résiduels des différentes articulations du manipulateur 10 et de faciliter ainsi le déplacement manuel du dispositif de manipulation de charge 1;
- par mesure des amplitudes et sens respectifs des rotations des moteurs 52, 62 et 72, mesurer la position relative des différents éléments du manipulateur 10 dans l'espace, ces mesures pouvant être réalisés par des codeurs 81, 82 et 83 respectivement situés dans les moteurs 52, 62 et 72. Un calibrage permet de définir la position dans l'espace des éléments du manipulateur 10 de manière absolue et un traitement adéquat des données permet alors de déduire des vitesses de rotation et des couples (mesure du courant consommé);
- par application de couples s'opposant à l'éloignement de l'extrémité du manipulateur 10 d'une trajectoire déterminée, réaliser un guidage intuitif du manipulateur 10.

En raison de la présence des contrepoids 23, 24 et de l'effort d'équilibrage en charge exercé par le vérin 42, les vérins à câble 50, 60 et 70 ne sont pas soumis (ou indirectement au travers des inerties) aux effets du poids propre des éléments du manipulateur 10 ou de la charge à manipuler 20. Ceci permet de limiter la capacité d'efforts des vérins à câbles 50, 60 et 70 rendant ceux-ci sans danger pour l'opérateur, y compris dans le cas d'activation intempestive ou de consigne d'amplitude erronée. Par exemple, pour une charge 20 à manipuler dont le poids est compris entre 0 et 1000 Newtons, les vérins à câbles 50, 60 et 70 exercent des efforts compris entre 0 et 50 Newtons, soit un rapport poids de la charge manipulée/effort de guidage pouvant aller jusqu'à 20.

Dans un usage nominal du dispositif de manipulation 1 et afin d'augmenter la sûreté du système, les vitesses de déplacement des éléments du manipulateur 10 peuvent être limitées par bridage de la tension d'alimentation des moteurs 52, 62, 72 des vérins à câbles 50, 60, 70 et de limiter ainsi la quantité d'énergie cinétique que le manipulateur 10 peut acquérir.

L'unité de supervision 90 va maintenant être décrite. Celle-ci comprend des moyens de modélisation tridimensionnelle des éléments du manipulateur de charge 10, ici sous la forme d'un modeleur tridimensionnel 91 au format 3DXML^{©} ainsi que des moyens de traitement 92 des éléments modélisés. Ces moyens sont généralement des modules complétant les moteurs de modélisation tridimensionnelle. La charge 20 ainsi que d'autres éléments de l'environnement du dispositif de manipulation 1 peuvent également être modélisés. Les éléments du manipulateur de charge 10 qui sont modélisés comprennent notamment le châssis 12, le segment de flèche 13, la bielle de renvoi 14 et le segment de balancier 18. Enfin, l'unité de supervision 90 comprend également des moyens de mémorisation 93 aptes à mémoriser une trajectoire de la charge et/ ou du manipulateur 10 ainsi qu'un processeur 94 en lien avec les moyens 91, 92 et 93 agissant tel un contrôleur de robot sur l'ensemble des éléments du manipulateur 10. L'unité de supervision 90 est capable d'effectuer des opérations logiques sur les éléments modélisés, de recevoir des informations de la part du processeur 94 sur l'état du manipulateur 10 et de générer des consignes destinées au manipulateur 10 en corrélation avec l'état et les contraintes appliquées sur les éléments modélisés.

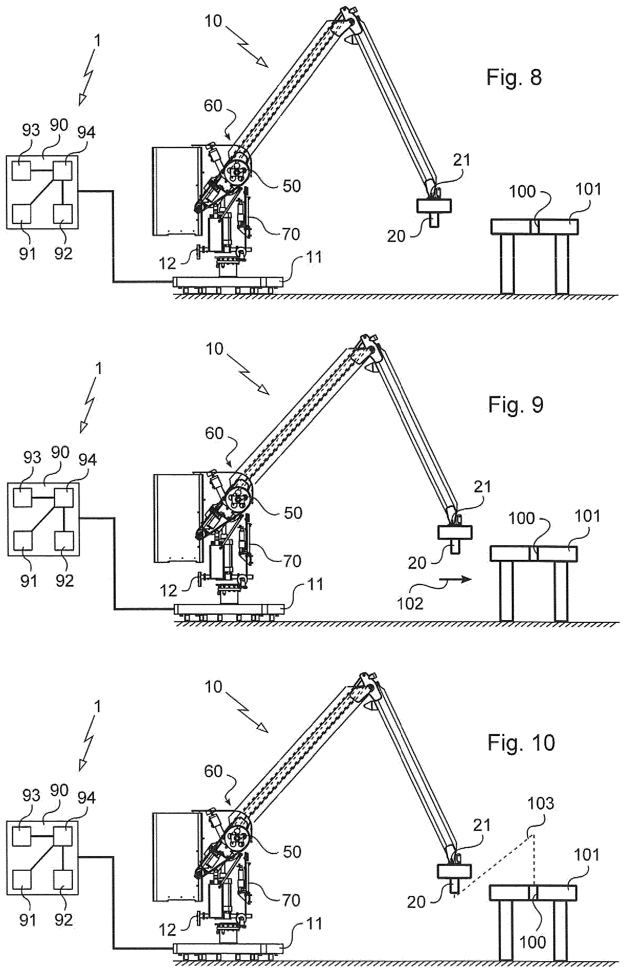

Le fonctionnement du dispositif de manipulation de charge va être décrit en référence aux figures 8 à 10 et en application à la manipulation d'une charge cylindrique 20 liée à l'extrémité 21 du manipulateur 10 et destinée à être placée dans un alésage 100 d'une table 101 de travail. L'ensemble des éléments du manipulateur 10, la charge 20 ainsi que la table de travail 101 et son alésage 100 sont préalablement modélisés par le moteur de modélisation tridimensionnelle 91 et mémorisés par les moyens de mémorisation 93.

Lorsque l'opérateur déplace le manipulateur de charge 10, les codeurs 81, 82 et 83 respectivement situés dans les moteurs 52, 62 et 72 des vérins à câbles 50, 60 et 70 transmettent l'amplitude et le sens des rotations relatives de chacun de ces moteurs vers l'unité de supervision 90. Les moyens de traitement 92 des éléments modélisés mettent alors à jour, en temps réel, une modélisation des positions relatives du manipulateur 10, de la charge 20 et de la table 101. La figure 9 représente une situation dans laquelle le mouvement du manipulateur 10 (ici, un déplacement sur la droite selon la figure 9 et représenté par la flèche 102) est susceptible d'amener la charge 20 à entrer en collision avec la table 101. Les moyens de traitement 92 identifient cette possibilité de collision par l'analyse des mouvements des éléments modélisés et envoient une consigne à un ou plusieurs des vérins à câble 50, 60 et 70 de manière à exercer un effort s'opposant au mouvement du manipulateur 10 pouvant amener à une collision entre la charge 20 et la table de travail 101. Dans le cas du mouvement selon la flèche 102, les moyens de traitement enverront une consigne au vérin à câble 50 de manière à ramener la charge 20 vers la gauche selon la représentation de la figure 9. Préférentiellement, l'effort visant à s'opposer au mouvement selon la flèche 102 augmentera au fur et à mesure que les moyens de supervision 90 détecteront un rapprochement de la charge 20 et de la table 100. Ainsi, l'utilisateur ressentira une résistance croissante au fur et à mesure qu'il persistera dans le déplacement 102 de la charge 20.

On obtient ainsi un dispositif d'anti-collision d'un manipulateur de charge qui envoie des informations intuitives aisément interprétables par l'opérateur et qui met en œuvre des forces insusceptibles de blesser l'opérateur.

Selon un autre mode de fonctionnement, les moyens de mémorisation 93 de l'unité de supervision 90 comprennent la modélisation d'une trajectoire de référence 103, représentée en pointillé sur la figure 10. Lors d'un déplacement du manipulateur 10 par l'opérateur, les moyens de traitement 92 des éléments modélisés mettent à jour, en temps réel, une modélisation de la position de la charge 20. Les moyens de traitement 92 analysent également les mouvements du manipulateur 10 de manière à détecter tout mouvement pouvant amener à un écart 104 de la modélisation de la trajectoire de la charge 20 avec la modélisation de la trajectoire de référence 103 qui serait supérieur à une valeur seuil déterminée 105. La valeur seuil 105 peut évoluer au cours du déplacement de la charge 20 le long de la trajectoire 103, par exemple pour guider de plus en plus précisément la charge 20 au fur et à mesure de son approche de l'alésage 101. Lorsque les moyens de traitement 93 détectent un mouvement du manipulateur pouvant amener à un écart 104 supérieur à la valeur seuil 105, les moyens de traitement 93 envoient une consigne aux vérins à câble 50, 60 et 70 de manière à exercer un effort s'opposant au mouvement du manipulateur amenant à un écart 104 supérieur à la valeur seuil 105. La valeur seuil peut être égale à 0.

On obtient ainsi un dispositif de guidage d'un manipulateur de charge qui envoie des informations intuitives aisément interprétables par l'opérateur et qui met en œuvre des forces insusceptibles de blesser l'opérateur.

Les éléments identiques ou analogues à ceux précédemment décrits porteront une référence numérique augmentée de deux centaines dans la description qui suit des deuxièmes et troisièmes modes de réalisation de l'invention.

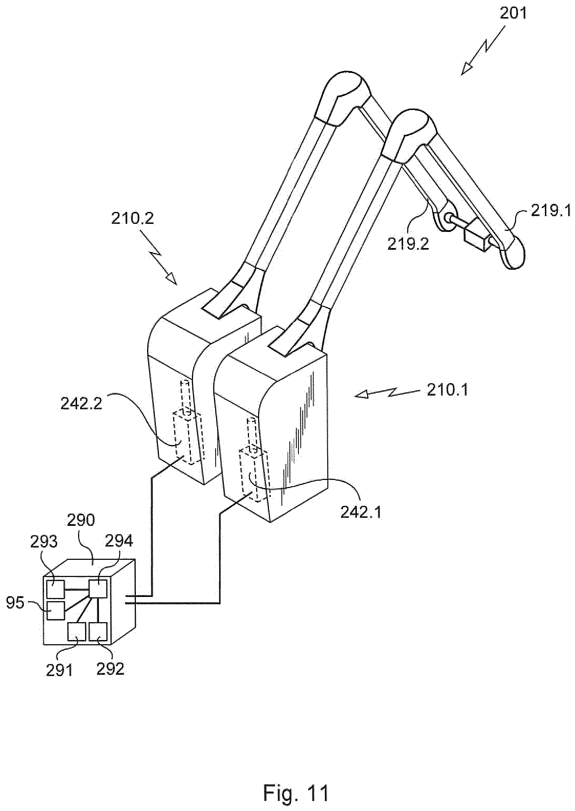

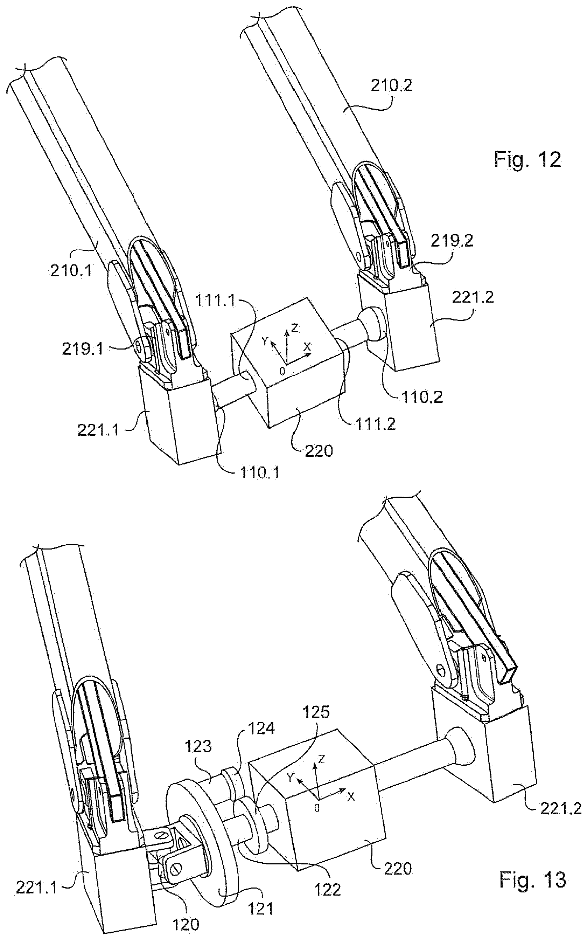

En référence aux figures 11 et 12, un deuxième mode de réalisation du dispositif de manipulation de charge 201 de l'invention comprend un premier manipulateur 210.1 et un deuxième manipulateur 210.2 mis en parallèle et dont les extrémités respectives 219.1 et 219.2 comprennent les platines de fixation 221.1 et 221.2 de la charge 220 à manipuler. Les platines 221.1 et 221.2 sont identiques et portent chacune un axe rotulé 110.1 et 110.2 dont les extrémités 111.1 et 111.2 opposées aux rotules sont fixées à la charge 220. Les axes 111.1 et 111.2 laissent ainsi libre en rotation la charge 220 autour d'un axe joignant les centres des rotules 110.1 et 110.2.

Les manipulateurs 210.1 et 210.2 sont tous deux reliés à une même unité de supervision 290 qui comprend des moyens supplémentaires de pilotage 95 des vérins 242.1 et 242.2 d'équilibrage en charge respectifs des manipulateurs 210.1 et 210.2. Ces moyens de pilotage 95 des vérins 242.1 et 242.2 réalisent un équilibrage des moments du poids de la charge manipulée alors que dans le cas d'un unique manipulateur, la force d'équilibrage générée par le vérin 42 est réglée et constante pour une charge donnée. Ainsi, les mouvements combinés des deux manipulateurs 210.1 et 210.2 ainsi que le montage de la charge 220 à manipuler sur des axes rotulés 110.1 et 110.2 permet l'équilibrage -et le guidage- de la charge 220 suivant cinq degrés de liberté. Si l'on considère un repère orthogonal Oxyz lié au centre de la charge 220 et dont l'axe Ox a la même direction qu'un axe reliant les centres des rotules 110.1 et 110.2, les cinq degrés de liberté pilotés par les mouvements des manipulateurs 210.1 et 210.2 correspondent aux translations selon les axes Ox, Oy et Oz ainsi que les rotations autour des axes Oz et Oy.

La figure 13 représente un troisième mode de réalisation identique au mode de réalisation de la figure 11 précédemment décrit et dans lequel la platine 221.1 comprend un cardan 120 relié à un plateau 121 recevant à rotation un axe 122 relié à la charge 220. Un moteur 123 solidaire du plateau 121 actionne une première roue dentée 124 engrenant avec une deuxième roue dentée 125 solidaire de l'arbre 122. Le moteur 123 est relié à l'unité de supervision 290 et est commandable par un opérateur. Ainsi, le moteur 123 permet d'assurer le contrôle de l'équilibrage de la charge selon le sixième et dernier degré de liberté, à savoir la rotation autour de l'axe Ox.

Bien entendu, l'invention n'est pas limitée aux modes de réalisation décrits mais englobe toute variante entrant dans le champ de l'invention telle que définie par les revendications

En particulier,
- bien qu'ici la charge soit liée au manipulateur à l'aide d'une platine de fixation, l'invention s'applique également à d'autres moyens de fixation d'une charge comme par exemple un crochet, une manille, une élingue souple, un palonnier ainsi que tout autre système articulé additionnel à un ou plusieurs degrés de liberté, motorisés ou non et plus particulièrement un mécanisme motorisé pouvant autoriser une rotation selon un axe vertical;
- bien qu'ici l'équilibrage à vide du manipulateur soit effectué à l'aide de contrepoids, l'invention s'applique également à d'autres moyens d'équilibrage à vide comme par exemple un vérin ou un actionneur électrique;
- bien qu'ici l'équilibrage en charge du manipulateur soit effectué à l'aide d'un vérin, l'invention s'applique également à d'autres moyens d'équilibrage en charge comme par exemple un contrepoids, un moteur électrique ou un système élastique;
- bien qu'ici la mesure de la position de chacun des éléments du manipulateur soit réalisée à l'aide de codeurs situés dans les moteurs des vérins à câbles, l'invention s'applique également à d'autres moyens de mesure de la position de chacun des éléments du manipulateur comme par exemple des codeurs positionnés à chaque articulation, des accéléromètres ou une caméra optique;
- bien qu'ici les moyens de guidage comprennent des vérins à câbles, l'invention s'applique également à d'autres types de moyens de guidage comme par exemple des vérins hydrauliques, des vérins électriques ou des moteurs ;
- bien qu'ici l'effort maximal développé par les moyens de guidage soit de 50 Newtons pour un poids de la charge manipulée pouvant aller jusqu'à 1000 Newtons, l'invention s'applique également à d'autres valeurs maximales d'efforts développés par les moyens de guidage et de poids de charge à manipuler. Il est notamment possible de concevoir un dispositif de manipulation de charge tenant compte de normes spécifiques pour le soulèvement des objets (équilibrage en charge et à vide) et de normes relatives aux efforts de contacts tolérables par l'humain, ces valeurs pouvant varier selon le type de tâches ou les législations nationales ;
- bien qu'ici les moyens de modélisation comprennent le modeleur tridimensionnel sous format 3DXML, l'invention s'applique également à d'autres types de modeleur tridimensionnel comme par exemple 3D turbo^{©}, Hypermesh^{©} ou Catia^{©} ainsi que tout modeleur capable de fournir un maillage sous un format de type « obj » ;
- bien qu'ici la génération des consignes de guidage ou d'anti-collision s'appuie sur un modèle 3D défini a priori, l'invention s'applique également aux modèles obtenus avec d'autres outils de modélisation et notamment à ceux obtenus ou modifiés en temps réel par des capteurs capables de fournir des nuages de points comme les caméras 3D ou les lasers de télédétection ;
- bien qu'ici les moyens d'équilibrage de la rotation de la charge autour d'un axe reliant les extrémités des manipulateurs comprennent deux roues dentées coopérant ensemble, l'invention s'applique à d'autres moyens complémentaires d'équilibrage de la charge liés aux extrémités des manipulateurs comme par exemple une liaison poulie-courroie, une liaison entre deux roues lisses, un mouvement initié par un actionneur télescopique ou tout autre type d'actionneur rotatif.

## Revendications

1. Dispositif de manipulation de charge (1) comportant un manipulateur de charge (10) comportant au moins deux segments (13, 18) articulés entre eux, dont un segment de flèche (13) également articulé sur un châssis (12) et un segment de balancier (18) qui comprend une extrémité destinée à recevoir une charge (20) à manipuler, le dispositif de manipulation de charge (1) comprenant des moyens d'équilibrage (42, 23, 24) de sorte que le manipulateur de charge (10) soit stable en toute position qu'il porte la charge ou non, des moyens de guidage (50, 60, 70) distincts des moyens d'équilibrage pour contraindre la position du manipulateur de charge (10) et des moyens de mesure (50, 60, 70) de la position de chacun des éléments (13, 14, 18) du manipulateur de charge (10), **caractérisé en ce que** le dispositif de manipulation de charge (1) comprend des moyens de modélisation tridimensionnelle (91) des éléments (12, 13, 14, 18) du manipulateur de charge (10), de son environnement (101) et/ou de la charge (20) destinée à être liée à l'extrémité du segment de balancier (18), le dispositif de manipulation de charge (1) comprenant également des moyens de traitement (92) des éléments modélisés (13, 14, 18, 20, 101) pour détecter un mouvement du manipulateur de charge (10) pouvant amener à une collision entre les éléments modélisés (13, 14, 18, 20, 101) et pour envoyer une consigne aux moyens de guidage (50, 60, 70) du manipulateur de charge (10) pour qu'ils génèrent un effort s'opposant au mouvement pouvant amener à la collision.

2. Dispositif de manipulation de charge (1) selon la revendication 1, dans lequel le manipulateur de charge (10) comprend une bielle de renvoi (14) parallèle à un segment de flèche (13) articulé sur le châssis (12), le segment de flèche (13) et la bielle de renvoi (14) ayant des premières extrémités articulées sur un segment de balancier (18) dont une extrémité est destinée à être liée à la charge (20) à manipuler et les deuxièmes extrémités du segment de flèche (13) et de la bielle de renvoi (14) étant reliées par une bielle (15) de manière à former un parallélogramme déformable, les moyens d'équilibrage (41, 23, 24) comprenant des moyens d'équilibrage à vide (23, 24) pour équilibrer le manipulateur de charge (10) à vide et des moyens d'équilibrage en charge (41) pour équilibrer le manipulateur de charge (10) en charge.

3. Dispositif de manipulation de charge (1) selon la revendication 1, dans lequel les moyens de guidage (50, 60, 70) du manipulateur comprennent un vérin à câble (50, 60, 70).

4. Dispositif de manipulation de charge (1) selon la revendication 1, dans lequel les moyens de traitement (92) des éléments modélisés (13, 14, 18, 20, 101) comprennent des moyens de mémorisation (93) d'au moins une modélisation d'une trajectoire de référence (103) de la charge à manipuler (20), les moyens de traitement (92) des éléments modélisés (13, 14, 18, 20, 101) étant agencés pour détecter un mouvement du manipulateur de charge (10) pouvant amener à un écart (104) entre la modélisation de la trajectoire de la charge (20) et la modélisation de la trajectoire de référence (103) et pour envoyer une consigne aux moyens de guidage (50, 60, 70) du manipulateur de charge (10) pour qu'ils génèrent un effort s'opposant au mouvement du manipulateur de charge (10) et pouvant amener à un écart entre la modélisation de la trajectoire de la charge (20) et la modélisation de la trajectoire de référence (103).

5. Dispositif de manipulation de charge (201) selon la revendication 1, comprenant un deuxième manipulateur de charge (210.2) mis en parallèle avec un premier manipulateur de charge (210.1), les extrémités (219.1, 219.2) de chaque manipulateur étant reliées à la charge à manipuler (220) par des moyens de liaison (221.1, 221.2) comprenant au moins une rotule (110), le dispositif de manipulation de charge comprenant également des moyens de pilotage des moyens d'équilibrage (242.1, 242.2) de chaque manipulateur.

6. Dispositif de manipulation de charge (201) selon la revendication 5, dans lequel les moyens de liaison (221.1, 221.2) comprennent des moyens d'équilibrage (122, 123) de la rotation de la charge (220) autour d'un axe reliant les extrémités des manipulateurs (210.1, 210.2).

## Patentansprüche

1. Lasthandhabungsvorrichtung (1), umfassend einen Lastmanipulator (10) der mindestens zwei Segmente (13, 18) umfasst, die aneinander angelenkt sind, darunter ein Auslegersegment (13), das ferner an einem Gestell (12) angelenkt ist, und ein Balanciersegment (18), das ein Ende umfasst, das dazu bestimmt ist, eine zu handhabende Last (20) aufzunehmen, wobei die Lasthandhabungsvorrichtung (1) Ausgleichsmittel (42, 23, 24) umfasst, sodass der Lastmanipulator (10) in jeder Position stabil ist, unabhängig davon, ob er die Last trägt oder nicht, von den Ausgleichsmitteln getrennte Führungsmittel (50, 60, 70), um die Position des Lastmanipulators (10) zu erzwingen, und Messmittel (50, 60, 70) zum Messen der Position jedes der Elemente (13, 14, 18) des Lastmanipulators (10), **dadurch gekennzeichnet, dass** die Lasthandhabungsvorrichtung (1) Mittel (91) zur dreidimensionalen Modellierung der Elemente (12, 13, 14, 18) des Lastmanipulators (10), seiner Umgebung (101) und/oder der Last (20) umfasst, die dazu bestimmt ist, mit dem Ende des Balanciersegments (18) verbunden zu werden, wobei die Lasthandhabungsvorrichtung (1) ferner Verarbeitungsmittel (92) zur Verarbeitung der modellierten Elemente (13, 14, 18, 20, 101) umfasst, um eine Bewegung des Lastmanipulators (10) zu erfassen, die zu einer Kollision zwischen den modellierten Elementen (13, 14, 18, 20, 101) führen kann, und um einen Sollwert an die Führungsmittel (50, 60, 70) des Lastmanipulators (10) zu senden, damit sie eine Kraft erzeugen, die sich der Bewegung, die zur Kollision führen kann, widersetzt.

2. Lasthandhabungsvorrichtung (1) nach Anspruch 1, bei der der Lastmanipulator (10) eine Pleuelstange (14) umfasst, die parallel zu einem an dem Gestell (12) angelenkten Auslegersegment (13) ist, wobei das Auslegersegment (13) und die Pleuelstange (14) erste Enden haben, die an einem Balanciersegment (18) angelenkt sind, von dem ein Ende dazu bestimmt ist, mit der zu handhabenden Last (20) verbunden zu werden, und wobei die zweiten Enden des Auslegersegments (13) und der Pleuelstange (14) über eine Stange (15) derart verbunden sind, dass sie ein verformbares Parallelogramm bilden, wobei die Ausgleichsmittel (41, 23, 24) Leerausgleichsmittel (23, 24) umfassen, um den Lastmanipulator (10) ohne Last auszugleichen, sowie Lastausgleichsmittel (41), um den Lastmanipulator (10) mit Last auszugleichen.

3. Lasthandhabungsvorrichtung (1) nach Anspruch 1, bei der die Führungsmittel (50, 60, 70) zum Führen des Manipulators eine Seilwinde (50, 60, 70) umfassen.

4. Lasthandhabungsvorrichtung (1) nach Anspruch 1, bei der die Verarbeitungsmittel (92) zum Verarbeiten der modellierten Elemente (13, 14, 18, 20, 101) Speichermittel (93) zum Speichern mindestens einer Modellierung einer Referenzbahn (103) der zu handhabenden Last (20) umfassen, wobei die Verarbeitungsmittel (92) zum Verarbeiten der modellierten Elemente (13, 14, 18, 20, 101) ausgebildet sind, um eine Bewegung des Lastmanipulators (10), die zu einem Abstand (104) zwischen der Modellierung der Bahn der Last (20) und der Modellierung der Referenzbahn (103) führen kann, zu erfassen und um einen Sollwert an die Führungsmittel (50, 60, 70) zum Führen des Lastmanipulators (10) zu senden, damit sie eine Kraft erzeugen, die sich der Bewegung des Lastmanipulators (10) widersetzt und zu einem Abstand zwischen der Modellierung der Bahn der Last (20) und der Modellierung der Referenzbahn (103) führen kann.

5. Lasthandhabungsvorrichtung (201) nach Anspruch 1, umfassend einen zweiten Lastmanipulator (210.2), der parallel zu einem ersten Lastmanipulator (210.1) angeordnet ist, wobei die Enden (219.1, 219.2) jedes Manipulators mit der zu handhabenden Last (220) über Verbindungsmittel (221.1, 221.2) verbunden sind, die mindestens ein Kugelgelenk (110) umfassen, wobei die Lasthandhabungsvorrichtung ferner Steuermittel zum Steuern der Ausgleichsmittel (242.1, 242.2) jedes Manipulators umfasst.

6. Lasthandhabungsvorrichtung (201) nach Anspruch 5, bei der die Verbindungsmittel (221.1, 221.2) Ausgleichsmittel (122, 123) zum Ausgleich der Drehung der Last (220) um eine Achse umfassen, die die Enden der Manipulatoren (210.1, 210.2) verbindet.

## Claims

1. Load manipulating device (1) including a load manipulator (10) including at least two segments (13, 18) articulated with respect to each other, comprising a boom segment (13) that is also articulated on a frame (12) and a balance segment (18) which comprises an end intended to receive a load (20) to be manipulated, the load manipulating device (1) comprising balancing means (42, 23, 24) such that the load manipulator (10) is stable in any position, whether or not bearing the load, guidance means (50, 60, 70) distinct from the balancing means for constraining the position of the load manipulator (10), means of measuring (50, 60, 70) the position of each of the elements (13, 14, 18) of the load manipulator (10), **characterized in that** the load manipulating device comprises means of three-dimensional modelling (91) of the elements (12, 13, 14, 18) of the load manipulator (10), of its environment (101) and/or of the load (20) intended to be connected to the end of the balance segment (18), the load manipulating device (1) similarly comprising means of processing (92) the modelled elements (13, 14, 18, 20, 101) in order to detect a movement of the load manipulator (10) that could lead to a collision between the modelled elements (13, 14, 18, 20, 101) and in order to send an instruction to the guidance means (50, 60, 70) of the load manipulator (10) in order for them to generate a force opposing the movement that could lead to the collision.

2. Load manipulating device (1) according to claim 1, in which the load manipulator (10) comprises a connecting rod (14) parallel to a boom segment (13) articulated on the frame (12), the boom segment (13) and the connecting rod (14) having first ends articulated on a balance segment (18), one end being intended to be connected to the load (20) to be manipulated, and the second ends of the boom segment (13) and of the connecting rod (14) being connected by a rod (15) in such a way as to form a deformable parallelogram, the balancing means (41, 23, 24) comprising balancing means when unladen (23, 24) to balance the load manipulator (10) when unladen and balancing means when laden (41) to balance the load manipulator (10) when laden.

3. Load manipulating device (1) according to claim 1, in which the guidance means (50, 60, 70) of the manipulator comprise a cable-actuated cylinder (50, 60, 70) .

4. Load manipulating device (1) according to claim 1, in which the means of processing (92) the modelled elements (13, 14, 18, 20, 101) comprise storage means (93) for at least one modelling of a reference trajectory (103) of the load to be manipulated (20), the means of processing (92) the modelled elements (13, 14, 18, 20, 101) being arranged in order to detect a movement of the load manipulator (10) that could lead to a difference (104) between the modelling of the trajectory of the load (20) and the modelling of the reference trajectory (103), and in order to send an instruction to the guidance means (50, 60, 70) of the load manipulator (10) in order for them to generate a force opposing the movement of the load manipulator (10) and that could lead to a difference between the modelling of the trajectory of the load (20) and the modelling of the reference trajectory (103).

5. Load manipulating device (201) according to claim 1, comprising a second load manipulator (210.2) positioned parallel with a first load manipulator (210.1), the ends (219.1, 219.2) of each manipulator being connected to the load to be manipulated (220) by means of connection (221.1, 221.2) comprising at least one ball joint (110), the load manipulating device similarly comprising means for controlling the balancing means (242.1, 242.2) of each manipulator.

6. Load manipulating device (201) according to claim 6, in which the means of connection (221.1, 221.2) comprise means of balancing (122, 123) the rotation of the load (220) about an axis connecting the ends of the manipulators (210.1, 210.2).
